# EUROPEAN PATENT APPLICATION

(11) **EP 4 417 358 A1**
(43) Date of publication of application: **21.08.2024**
(21) Application number: 24156754.4
(22) Date of filing: 09.02.2024
(51) Int. Cl.: B23Q 3/155, B23Q 3/157

(54) **MACHINE TOOL WITH IMPROVED TOOL CHANGING SYSTEM AND METHOD THEREOF**

(30) Priority: 16.02.2023 IT 202300002652
(71) Applicant: SCM Group S.p.A., 47921 Rimini (RN) (IT)
(72) Inventor: VANNUCCI, Carlo, 47921 Rimini (IT)
(74) Representative: Tiburzi, Andrea

(57) **Abstract**

The present invention concerns a machine (M), for working pieces made of wood or similar materials, in composite, polymeric, metallic, ceramic, or other materials, comprising a machining head (1) for machining said pieces, a tool changing system (2), having a tool magazine (21), equipped with a frame (211) with one or more seats (212), wherein each seat is suitable for housing at least one respective tool (3), characterized in that said tool magazine (21) comprises a transporting device (213), equipped with a first gripping member (2131) for picking up a tool (3), wherein said transporting device (213) is movable on said frame (211), and wherein said transporting device (213) is configured to move in correspondence with one of said one or more seats (212), wherein a tool (3) is housed, to couple to said tool (3), through said first gripping member (2131), and move said tool (3) into a predefined pick-up position (PP), wherein said machining head (1) can pick up said tool (3).

The present invention also concerns a tool changing system (2) and an operating method of a machine (M), for machining pieces.

## Description

The present invention concerns a machine tool for workpieces, in particular pieces made of wood or similar materials, composite, polymeric, ceramic, metallic, or other materials, and a tool change system that can be installed in said machine.

The present invention also concerns a method of operating the machine tool.

### Field of invention

More in detail, the invention concerns a machine tool provided with a tool-changing system equipped with a tool magazine, designed and created, in particular, to house a plurality of machining tools, and to allow the transfer of the tool between a head of machining and the tool magazine and vice versa.

In the following the description will be directed to a tool change system installed in a woodworking machining center, but it is clear that it should not be considered limited to this specific use. The tool-changing system, in fact, can be installed on any type of machine tool including a machining head and a tool magazine.

### Prior art

As is well known, there are currently machine tools known as "working centers" to undergo various machining on pieces made of wood or similar materials, as well as pieces made of composite, polymeric, ceramic, metallic, or other materials. Among these machining, by way of example, milling, drilling, cutting, edging, etc. can be indicated.

These work centers are equipped with a working plane for supporting and blocking the pieces to be machined. Depending on the type of work to be carried out, this working plane can be a multifunction working plane or a so-called bar work surface. The working centers are also equipped with a crossbar, which can be mobile or fixed with respect to the working plane. Generally the crossbar supports one or more machining heads. Each machining head is movable along at least one axis. In the so-called five-axis machining centers, the machining head can move along three orthogonal axes and can rotate around two other axes. Generally, each machining head is equipped with a spindle, coupled, in use, to a tool holder, which can in turn be coupled to a specific tool depending on the type of machining to be performed.

Machining centers are usually equipped with one or more tool magazines to house the different types of tools. The tool magazines are configured to allow the machining head to pick up the tool to be used in the machining to be carried out and to release the tool that must not be used in the subsequent machining into one of these magazines.

The tool magazines are usually arranged on the crossbar, or in a perimeter area of the machine tool.

Some types of tool magazines, generally installed in machining centers, are of the rotary type. In this case, said tool magazines comprise a main structure, usually a plate, which can have different shapes, for example, circular, rectangular with beveled corners. The plate has, generally along its contour, a plurality of seats for the tools. These seats can have the shape of pliers, to house the tools with the relative tool holders coupled. The tools are usually arranged in the relevant magazine seats, so that the tool holder faces upwards. The magazines of the machining centers are motorized, to move all the seats for the tools, and place the seat containing the tool to be used in the subsequent machining in correspondence with a predefined position, so that the machining head can pick it up.

Magazines according to the prior art are disadvantageous in terms of costs, since they require a motor capable of moving all the tools present in the magazine, to move the tool to be used into a pick-up position by the machining head.

Furthermore, the described operation of the magazines according to the prior art involves unwanted waiting times, since the machining head must wait for the magazine, by rotating, to bring the desired tool to the predefined picking position.

Another disadvantage of known magazines is that the tool holder is arranged upwards, so that the chip accumulated during machining remains on the tool holder.

A further disadvantage of known magazines is that they have considerable dimensions, especially in the case of machine tools which require a large number of different tools.

### Purpose of the invention

In light of the above, it is therefore the aim of the present invention to realize a machine tool equipped with a tool change system having competitive costs compared to the prior art and which overcomes the technical problems of the prior art.

Another object of the invention is to provide a machine tool in which the tool change is faster than in the prior art.

A further aim of the invention is to reduce the size of the tool magazines, with the same number of tools housed, compared to known magazines.

### Object of the invention

It is, therefore, specific object of the present invention a machine, for working pieces made of wood or similar materials, in composite, polymeric, metallic, ceramic, or other materials, comprising a machining head for machining said pieces, a tool changing system, having a tool magazine, equipped with a frame with one or more seats, wherein each seat is suitable for housing at least one respective tool, characterized in that said tool magazine comprises a transporting device, equipped with a first gripping member for picking up a tool, wherein said transporting device is movable on said frame, and wherein said transporting device is configured to move in correspondence with one of said one or more seats, wherein a tool is housed, to couple to said tool, through said first gripping member, and move said tool into a predefined pick-up position, wherein said machining head can pick up said tool.

Always according to the invention, said transporting device may be configured for moving in relative motion towards a predefined release position, wherein the release of a tool by said machining head can take place, coupling, through said first gripping member, to a tool, positioned in said release position predefined by said machining head, moving and storing said tool in one of said one or more seats.

Still according to the invention, said tool changing system may comprise an exchange device, having a first housing capable of housing a tool.

Further according to the invention, said exchange device may comprise a second housing for housing a tool.

Advantageously according to the invention, said predefined picking position may be in one of said one or more seats.

Preferably according to the invention, said predefined release position may be in one of said one or more seats.

Conveniently according to the invention, said predefined picking position is in said first housing.

Always according to the invention, said predefined release position may be in said second housing.

Still according to the invention, said exchange device may be configured to rotate about a first axis.

Advantageously according to the invention, said tool magazine may comprise guide means and said transporting device may be movable along said guide means.

Further according to the invention, said one or more seats may be configured to house a respective tool coupled to a relative tool holder, wherein each of said seats is truncated-cone shaped, hollow, to house a portion of said tool holder, suitable for coupling with said machining head, so that said portion of said tool holder faces downwards, and each seat of said one or more seats have an opening in the lateral surface of the truncated cone shape, to allow the housing and the extraction of said respective tool.

Always according to the invention, said transporting device may be equipped with a main body and said first gripping member may be a stem, movable between a retracted position and an extracted position, with respect to said main body, and it is configured to couple with said tool when it is in said extracted position.

Still according to the invention, said first gripping member may be rotatably movable around a second axis, parallel or coinciding with an axis tangent to the trajectory, which can be covered by said transporting device.

Advantageously according to the invention, said transporting device may comprise at least a second gripping member.

Further according to the invention, said frame may be plate-shaped and has a first contour, and each of said one or more seats may be arranged along said first contour.

Conveniently according to the invention, said frame may be plate-shaped and has a first outline, forming a closed figure, and a second outline, inside said first outline, and each of said one or more seats may be arranged along said first contour or said second contour.

It is further object of the present invention an operating method of a machine, for working pieces in wood or similar materials, in composite, polymeric, metallic, ceramic, or other materials, wherein said machine comprises a machining head for working said pieces, a tool changing system, having a tool magazine, equipped with a frame with one or more seats, wherein each seat is suitable for housing a respective tool, said tool magazine also being equipped with a transporting device, movable on said frame, having a first gripping member, said method comprising the following steps:
a) moving said transporting device in correspondence with one of said one or more seats, in which a tool is housed;
b) coupling said transporting device to said tool via said first gripping member;
c) extracting said tool from said one of said one or more seats;
d) moving said transport device, coupled to said tool, at a predefined pick-up position;
e) disconnecting said tool from said transport device; and
f) picking up said tool by means of said machining head.

Still according to the invention, said method may further comprise the following steps:
g) moving said tool into a predefined release position by means of said machining head;
h) moving said relative motion transport device towards said predefined release position;
i) coupling said transporting device to said tool via said first gripping member;
l) moving said transporting device coupled to said tool in correspondence with one of said one or more seats; and
m) housing said tool in one of said one or more seats.

Still according to the invention, said tool change system may comprise an exchange device, having a first housing and a second housing, said step d) involves moving said transport device, coupled to said tool, in correspondence with said first housing, and said step g) provides for releasing said tool in said second housing by means of said machining head.

Advantageously according to the invention, said step h) may provide for rotating said exchange device around a first axis (Q) so as to position said second housing in the position previously occupied by said first housing.

Conveniently according to the invention, said step d) and said step g) may occur at least partially simultaneously.

### Brief description of the figures

The present invention will be now described, for illustrative but not limitative purposes, according to its preferred embodiments, with particular reference to the figures of the enclosed drawings, wherein:

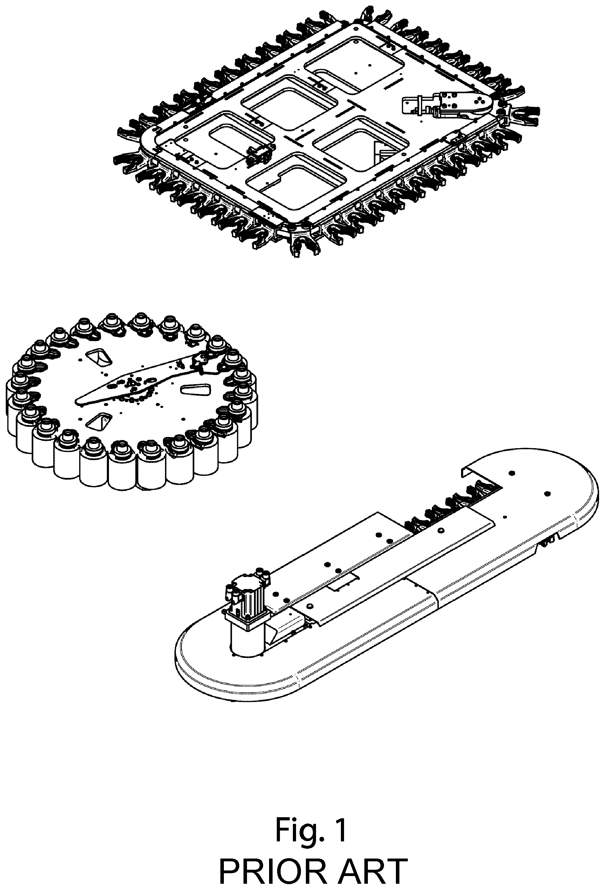

figure 1 shows an axonometric view of tool magazines according to the prior art;
figure 2 shows an axonometric view of a machine tool, known as a machining center, including a tool change system according to the invention;
figure 3 shows an axonometric view of a tool-changing system according to the invention;
figure 4 shows an axonometric view from below of the tool change system shown in figure 3;
figure 5 shows an axonometric view of a detail of the tool change system shown in figure 3;
figure 6 shows an axonometric view of the tool change system shown in figure 3 in step a;
figure 7 shows an axonometric view of the tool change system shown in figure 3 in step b;
figure 8 shows an axonometric view of the tool change system shown in figure 3 in step c;
figure 9 shows an axonometric view of the tool change system shown in figure 3 in a step d; and
figure 10 shows an axonometric view of the tool change system shown in figure 3 in step e.

### Detailed description

In the various figures the similar parts will be indicated with the same numerical references.

With reference to the attached figures, it is observed a machine tool, provided with a machining head and a tool change system, equipped with a tool magazine, to house a plurality of machining tools, and allow the transfer of said tools between the machining head and the tool magazine and vice versa.

In the following, the description will be aimed at a tool change system installed in a machine tool, known as a machining center, for the machining of pieces made of wood or similar materials, composite, polymeric, ceramic, metallic or other materials, but it is clear that it should not be considered limited to this specific use.

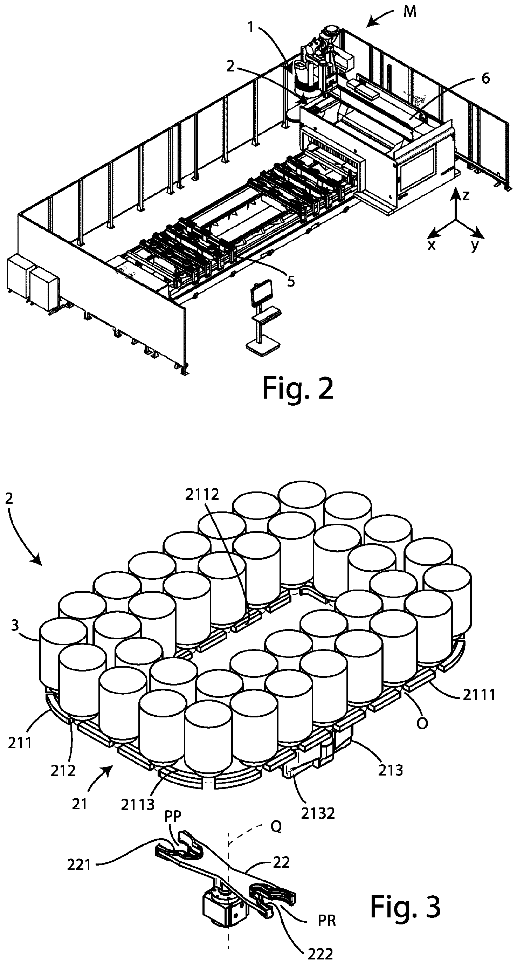

Figure 2 shows a machine M, comprising a working surface 5, of the so-called bar type, for supporting and blocking the pieces to be machined.

The machine M also has a crossbar 6, which can be mobile or fixed with respect to the working surface 5. The crossbar 6 supports a machining head 1. In other embodiments, there may be multiple machining heads.

The machining head 1 is movable along an X-axis, parallel to the main direction of development of the working surface 5, integrally with the crossbar 6, is movable along a Y-axis, orthogonal to the X-axis, along the crossbar 6, and is also movable along a Z-axis orthogonal to both the X-axis and the Y-axis.

In the present embodiment, the machining head 1 is a so-called five-axis head, therefore, in addition to having the movements described above, it can rotate around a rotation axis C, parallel to the Z-axis and around a further rotation axis B, inclined with respect to the rotation axis C. In another embodiment, the machining head 1 can move along a smaller number of axes and/or rotate around a greater or lesser number of axes.

The machining head 1 is provided with a spindle, coupled, in use, to a tool holder 4, which can in turn be coupled to a tool 3, specific depending on the type of machining to be performed on the piece. Among the machining, by way of example, milling, drilling, and cutting can be indicated.

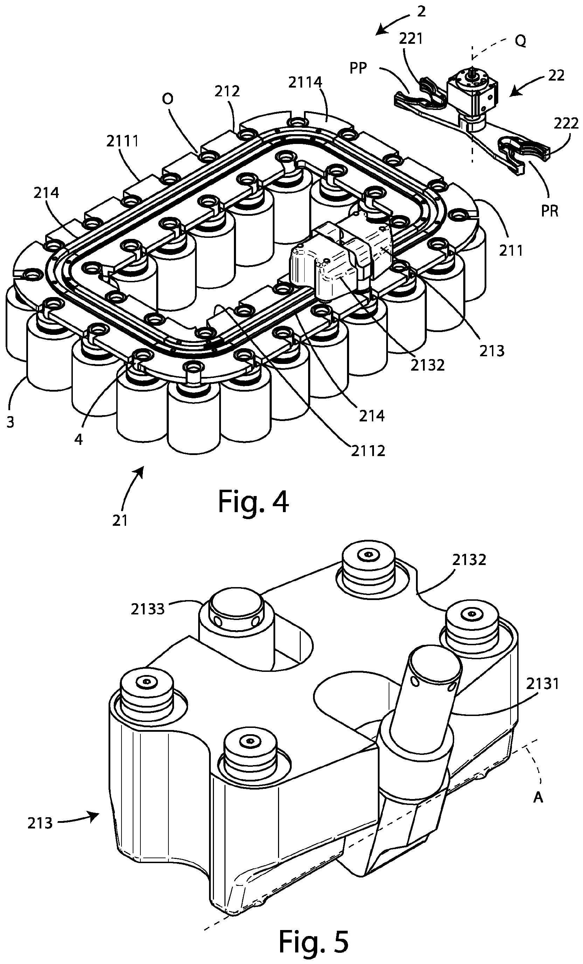

The machine M is provided with a tool change system 2, shown in figures 3-5, including a tool magazine 21, to house the different types of tools 3 to carry out the different machining. In another embodiment, the tool change system 2 comprises a plurality of tool magazines.

The tool change system 2 is configured to allow the machining head 1 to pick up the tool 3 to be used in the machining to be carried out and to release, in the tool magazine 21, the tool 3, which must not be used in the subsequent machining.

The tool magazine 21 is arranged in a perimeter area of the machine M. In other embodiments the tool magazine 21 is arranged on the crossbar 6.

The tool magazine 21 is equipped with a frame 211 with one or more seats 212, in which each seat is suitable for housing a respective tool 3.

The frame 211 is plate-shaped, has an upper surface 2113 and a lower surface 2114, and has a first contour 2111, in the shape of a rectangle with beveled corners, and a second contour 2112, internal to said first contour 2111, also it in the shape of a rectangle with beveled corners.

In another embodiment the frame 211 is plate-shaped and has only a first contour 2111.

In a further embodiment the frame 211 can present one or more contours of other shapes, for example circular in shape.

In the preferred embodiment, each seat of said one or more seats 212 is suitable for housing a respective tool 3, while the latter is coupled to the relevant tool holder 4.

In particular, each seat of said one or more seats 212 has a hollow truncated cone shape shaped to house a portion of said tool holder 4, also of truncated cone shape, suitable for coupling with said machining head 1, so that said portion of said tool holder 4 is facing downwards. This arrangement advantageously allows any chips accumulated during machining to fall by gravity onto the tools 3 not in use and onto the respective tool holders 4.

Each seat of said one or more seats 212 has an opening O in the lateral surface of the truncated cone to allow the housing and extraction of the respective tool 3.

In other embodiments each of said one or more seats 212 can have other shapes, for example the shape of a pliers and can be suitable for housing a respective tool 3, while it is coupled to the relevant tool holder 4, so that a portion of said tool holder 4, designed to couple with said machining head 1, is facing upwards.

The tool magazine 21 comprises a transport device 213, equipped with a main body 2132 and a first gripping member 2131.

The tool magazine 21 also comprises guiding means 214. In the preferred embodiment, the guiding means 214 comprise linear guides with bearings and a motion transmission system of the "pinion-rack" type. In another embodiment the motion transmission system can be of another type, for example "belt-type".

In the preferred embodiment the guiding means 214 are arranged on said lower surface 2114. In other embodiments the guiding means 214 can be arranged on said upper surface 2113.

The transport device 213 is mobile on the frame 211, in particular on the lower surface 2114, along the guide means 214, and is configured to move in correspondence with one of said one or more seats 212, in which a tool 3 is housed and to couple to the tool 3 via the first gripping member 2131.

The first gripping member 2131 is a stem, movable, pneumatically, between a retracted position and an extracted position with respect to the main body 2132, and is configured to couple with the tool 3 when it is in the extracted position.

In another embodiment the first gripping member 2131 is moved between the retracted position and the extracted position with respect to the main body 2132 via an electric or hydraulic drive.

In a preferred embodiment the transport device 213 also comprises second gripping member 2133.

In other embodiments, there may be only the first gripping member 2131 or a number of gripping members greater than two.

The first gripping member 2131 is movable, in rotation, around a second axis A, parallel or coinciding with an axis tangential to the trajectory traversable by said transport device 213, to allow the housing and extraction of the tool 3, which is passed through the opening. In the embodiment described, the aforementioned rotation occurs via a pneumatic actuation.

In other embodiments, the rotation drive of the first gripping member 2131 around the second axis A can also be of another type, for example an electric or hydraulic drive.

In the preferred embodiment, the tool change system 2 provides an exchange device 22, comprising a first housing 221 and a second housing 222, in particular, said first and second housings are of the "clamp" type. In another embodiment, the exchange device 22 provides only a first housing 222.

The exchange device 22 is configured to rotate about a first Q-axis. In the preferred embodiment the first Q-axis is vertical.

The operation of the machine M described above is as follows.

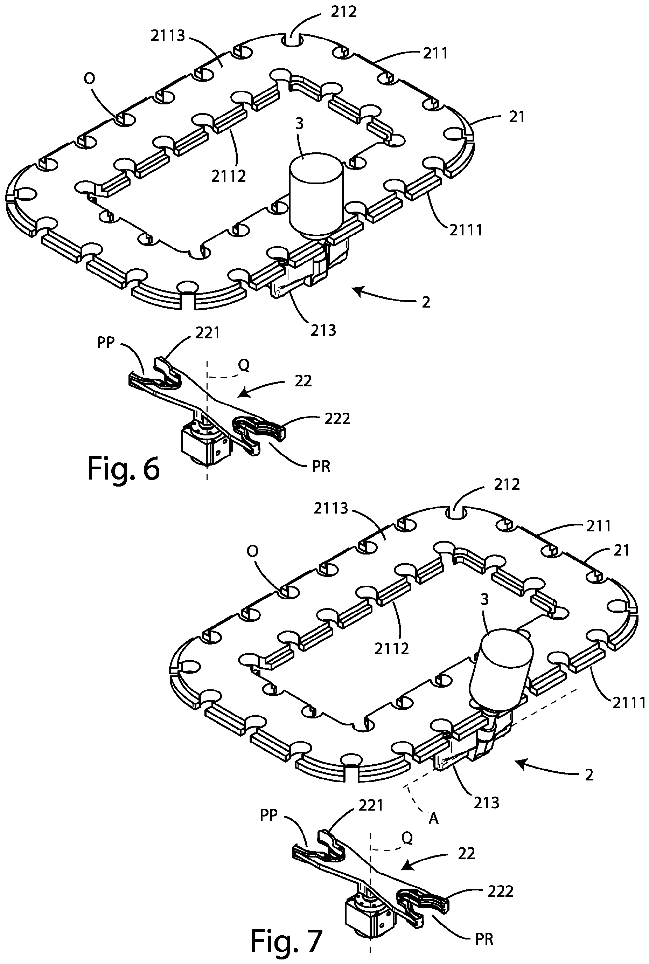

As can be seen in figure 6, the transport device 213 is moved along the guide means 214, on the lower surface 2114, in correspondence with one of said one or more seats 212, in which a respective tool 3 is housed.

In this configuration the first gripper 2131 passes from the retracted position to the extracted position to couple with the tool 3.

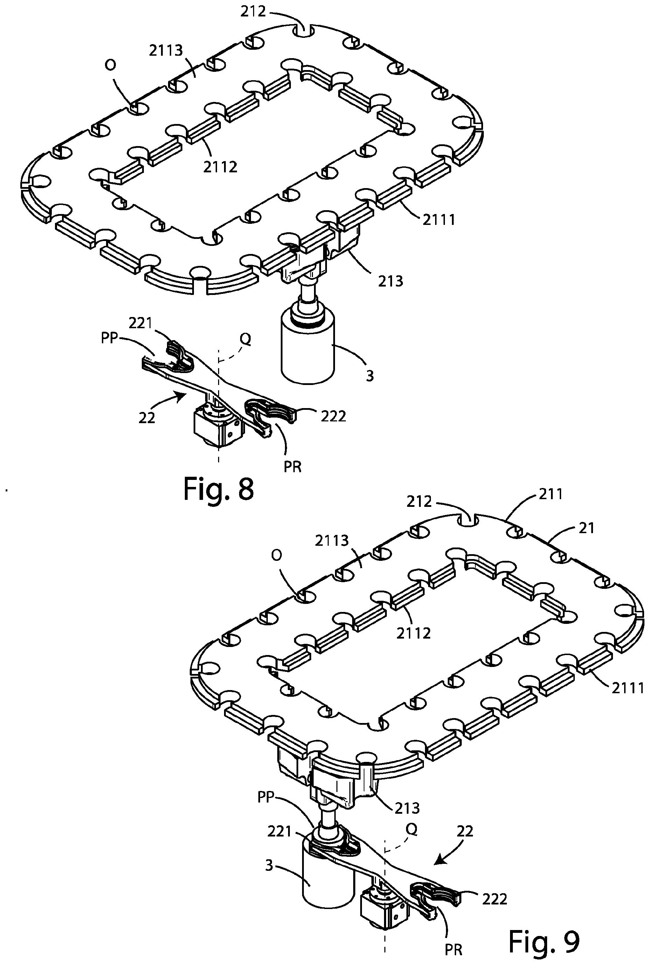

As can be seen in figures 7 and 8, the gripper 2131 rotates around the second axis A to extract the tool 3 from one of said one or more seats 212, passing it through the opening O and turning it upside down.

The transport device 213, now coupled to the tool 3, is moved to a predefined picking position PP. The tool 3 is decoupled from the transport device 213, causing the gripping member to pass into the retracted position.

In the preferred embodiment, as seen in figure 9, the default picking location PP is in the first slot 221.

In another embodiment the default picking position PP is in one of said one or more slots 212.

After using the tool 3 for a machining operation, the machining head 1 releases the tool 3 to a predefined release position PR. In the preferred embodiment the release position PR is in the second slot 222.

In another embodiment the default release position PR is in one of said one or more seats 212.

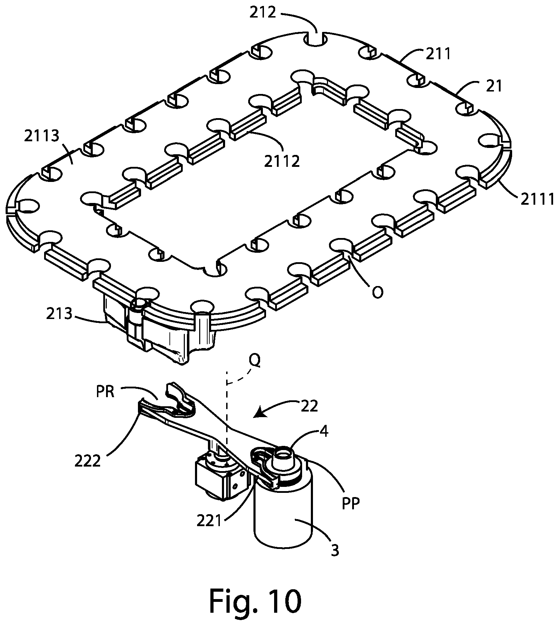

As can be seen in figure 10, the exchange device 22 is rotated around the first Q-axis so as to position said second housing 222 in the position previously occupied by the first housing 221.

The machining head 1 then takes the tool 3 from the first housing 221. The transport device 213, which had previously been moved in correspondence with the first housing 221, after the rotation of the exchange device 22, is located in correspondence with the second housing 222, therefore it can be coupled, via the first gripping member, to the tool 3 housed therein.

The transport device 213, coupled to said tool 3, is moved in correspondence with one of said one or more housings 212. The first gripping member 2131 then rotates around the second axis A to house the tool 3 in one of said one or more seats 212, passing it through the opening O and turning it upside down.

By returning the first gripper 2131 to the retracted position, the tool 3 is decoupled from the transport device 213.

In the preferred embodiment in which the frame 211 comprises the first contour 2111 and the second contour 2112, and the transport device includes the first gripper 2131 and the second gripper 2133, the first gripper 2131 is configured to pick up a tool 3 from one of the one or more seats 212 arranged on the first contour 2112, while the second gripping member 2133 is configured to pick up a tool 3 from one of the one or more seats 212 arranged on the second contour 2112.

In the preferred embodiment, the transport device 213, coupled to the tool 3, is moved to the predefined picking position PP at least partially simultaneously with the release of the tool 3, by the machining head 1, into the default release PR.

### Advantages

An advantage of the present invention is that of providing a machine tool equipped with a tool change system that is constructively simple and economical.

Another advantage of the invention is that of providing a tool change system comprising a tool magazine with reduced overall dimensions compared to magazines according to the prior art containing an equal number of tools.

Another advantage of the invention is that it allows the tool change step of a machine tool to occur more quickly compared to the prior art.

A further advantage of the invention is that of providing a tool change system in which the tool magazine tooling step is facilitated compared to the magazines of the prior art.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M), for working pieces made of wood or similar materials, in composite, polymeric, metallic, ceramic, or other materials, comprising
a machining head (1) for machining said pieces,
a tool changing system (2), having a tool magazine (21), equipped with a frame (211) with one or more seats (212), wherein each seat is suitable for housing at least one respective tool (3),
**characterized in that** said tool magazine (21) comprises
a transporting device (213), equipped with a first gripping member (2131) for picking up a tool (3),
wherein said transporting device (213) is movable on said frame (211), and
wherein said transporting device (213) is configured to move in correspondence with one of said one or more seats (212), wherein a tool (3) is housed, to couple to said tool (3), through said first gripping member (2131), and move said tool (3) into a predefined pick-up position (PP), wherein said machining head (1) can pick up said tool (3).

2. Machine (M) according to claim 1, **characterized in that** said transporting device (213) is configured for
moving in relative motion towards a predefined release position (PR), wherein the release of a tool (3) by said machining head (1) can take place,
coupling, through said first gripping member (2131), to a tool (3), positioned in said release position (PR) predefined by said machining head (1),
moving and storing said tool (3) in one of said one or more seats (212).

3. Machine (M) according to any one of the preceding claims, **characterized in that** said tool changing system (2) comprises an exchange device (22), having a first housing (221) capable of housing a tool (3).

4. Machine (M) according to the preceding claim **characterized in that** said exchange device (22) comprises a second housing (222) for housing a tool (3).

5. Machine (M) according to any one of the preceding claims, **characterized in that** said predefined picking position (PP) is in one of said one or more seats (212).

6. Machine (M) according to any one of claims 2-5, **characterized in that** said predefined release position (PR) is in one of said one or more seats (212).

7. Machine (M) according to any one of claims 3 or 4, **characterized in that** said predefined picking position (PP) is in said first housing (221).

8. Machine (M) according to claim 4 when depending on claim 2, **characterized in that** said predefined release position (PR) is in said second housing (222).

9. Machine (M) according to any one of claims 3-8 **characterized in that** said exchange device (22) is configured to rotate about a first axis (Q).

10. Machine (M) according to any one of the preceding claims, **characterized**
**in that** said tool magazine comprises guide means (214) and
**in that** said transporting device (213) is movable along said guide means (214).

11. Machine (M) according to any one of the preceding claims **characterized**
**in that** each of said one or more seats (212) is configured to house a respective tool (3) coupled to a relative tool holder (4), wherein each of said seats (212) is truncated-cone shaped, hollow, to house a portion of said tool holder (4), suitable for coupling with said machining head (1), so that said portion of said tool holder (4) faces downwards, and
**in that** each seat of said one or more seats (212) has an opening (O) in the lateral surface of the truncated cone shape, to allow the housing and the extraction of said respective tool (3).

12. Machine (M) according to any one of the preceding claims **characterized**
**in that** said transporting device (213) is equipped with a main body (2132) and
**in that** said first gripping member (2131) is a stem, movable between a retracted position and an extracted position, with respect to said main body (2132), and it is configured to couple with said tool (3) when it is in said extracted position.

13. Machine (M) according to the preceding claim, **characterized in that** said first gripping member (2131) is rotatably movable around a second axis (A), parallel or coinciding with an axis tangent to the trajectory, which can be covered by said transporting device (213).

14. Machine (M) according to any one of the preceding claims **characterized in that** said transporting device (213) comprises at least a second gripping member (2133).

15. Machine (M) according to any one of the preceding claims, **characterized in that** said frame (211) is plate-shaped and has a first contour (2111), and **in that** each of said one or more seats (212) is arranged along said first contour (2111).

16. Machine (M) according to any one of claims 1-14, **characterized**
**in that** said frame (211) is plate-shaped and has a first outline (2111), forming a closed figure, and a second outline (2112), inside said first outline (2111), and
**in that** each of said one or more seats (212) is arranged along said first contour (2111) or said second contour (2112).

17. Operating method of a machine (M), for working pieces in wood or similar materials, in composite, polymeric, metallic, ceramic, or other materials, wherein said machine (M) comprises a machining head (1) for working said pieces, a tool changing system (2), having a tool magazine (21), equipped with a frame (211) with one or more seats (212), wherein each seat is suitable for housing a respective tool (3), said tool magazine (21) also being equipped with a transporting device (213), movable on said frame (211), having a first gripping member (2131), said method comprising the following steps:
a) moving said transporting device (213) in correspondence with one of said one or more seats (212), in which a tool (3) is housed;
b) coupling said transporting device (213) to said tool (3) via said first gripping member (2131);
c) extracting said tool (3) from said one of said one or more seats (212);
d) moving said transport device (213), coupled to said tool (3), at a predefined pick-up position (PP);
e) disconnecting said tool (3) from said transport device (213); and
f) picking up said tool (3) by means of said machining head (1).

18. Operating method of a machine (M) according to the preceding claim, **characterized in that** it further comprises the following steps:
g) moving said tool (3) into a predefined release position (PR) by means of said machining head (1);
h) moving said relative motion transport device (213) towards said predefined release position (PR);
i) coupling said transporting device (213) to said tool (3) via said first gripping member (2131);
l) moving said transporting device (213) coupled to said tool (3) in correspondence with one of said one or more seats (212); and
m) housing said tool (3) in one of said one or more seats (212).

19. Operating method of a machine (M) according to the preceding claim, **characterized**
**in that** said tool change system (2) comprises an exchange device (22), having a first housing (221) and a second housing (222),
**in that** said step d) involves moving said transport device (213), coupled to said tool (3), in correspondence with said first housing (221), and
**in that** said step g) provides for releasing said tool (3) in said second housing (222) by means of said machining head (1).

20. Operating method of a machine (M) according to the preceding claim, **characterized in that** said step h) provides for rotating said exchange device (22) around a first axis (Q) so as to position said second housing (222) in the position previously occupied by said first housing (221).

21. Operating method of a machine (M) according to any one of claims 18-20, **characterized in that** said step d) and said step g) occur at least partially simultaneously.
